# EUROPÄISCHE PATENTSCHRIFT

(11) **EP 2 581 732 B1**
(45) Veröffentlichungstag und Bekanntmachung des Hinweises auf die Patenterteilung: **05.06.2019**
(21) Anmeldenummer: 12178035.7
(22) Anmeldetag: 26.07.2012
(51) Int. Cl.: G01N 21/90, G01N 21/93

(54) **Vorrichtung und Verfahren zum Überprüfen von Behälterinspektionseinheiten**
Method and device for checking container inspection units
Dispositif et procédé de vérification d'unités d'inspection de récipients

(30) Priorität: 19.03.2012 DE 102012204277; 13.10.2011 DE 102011084453
(43) Veröffentlichungstag der Anmeldung: 17.04.2013
(73) Patentinhaber: Krones AG, 93073 Neutraubling (DE)
(72) Erfinder: Aichinger, Karl, 94526 Metten (DE); Schober, Stefan, 93105 Tegernheim (DE); Klinger, Reinhard, 93170 Bernhardswald (DE)
(74) Vertreter: Grünecker Patent- und Rechtsanwälte PartG mbB

(56) Entgegenhaltungen:
- EP-A1- 2 186 736
- DE-A1- 3 324 449
- DE-A1- 3 829 025
- DE-A1- 19 602 655
- DE-A1- 19 646 694
- DE-A1-102006 022 492
- DE-A1-102009 037 779
- DE-C1- 4 302 656
- DE-U1- 29 803 507
- DE-U1- 29 910 452

## Beschreibung

Die Erfindung betrifft eine Vorrichtung und ein Verfahren zum Überprüfen von Behälterinspektionseinheiten gemäß Oberbegriff des Anspruchs 1, wie bekannt aus DE 43 02 656 C1.

Inspektionseinheiten für Behälter, wie beispielsweise Getränkeflaschen und dergleichen, werden während der Produktion regelmäßig überprüft, indem in den Einheiten Testbehälter inspiziert werden, die den im Produktionsbetrieb zu erkennenden Strukturen, beispielsweise einer Verschmutzung der Seitenwand, ähnliche Testmerkmale aufweisen. Werden diese erkannt, so wird von einer ordnungsgemäßen Funktion der Inspektionseinheit ausgegangen.

Hierzu ist es beispielsweise aus der DE 299 10 452 U1 bekannt, Testflaschen mit einem konzentrischen Transponder zu versehen, der eine Kennziffer zur eindeutigen Identifizierung der Testflasche enthält. Eine der Testflasche zugeordnete Kontrollinspektion, beispielsweise eine Seitenwandinspektion, und die zugehörige Messdatenauswertung können dadurch automatisch beim Einlaufen der Testflasche in die Inspektionseinheit ausgelöst werden.

Die DE 196 46 694 A1 beschreibt ferner eine Testflasche, bei der zur Markierung im Bodenbereich eine mittels Lichtschranken oder Metalldetektoren erkennbare Reflexfolie vorgesehen ist sowie ein Testmerkmal, beispielsweise eine Absplitterung im Mündungsbereich der Flasche.

Die EP 1 838 589 B1 schlägt vor, an Behältern elektronisch beschreibbare Identifizierungsmarke mit Angaben zu einem einzufüllenden oder eingefüllten Produkt anzubringen, mit einer Zeitkennung, mit einer Ortskennung und/oder mit Angaben zur Produktbearbeitung.

Nachteilig ist die Baugröße üblicher Transponder, die bei der Handhabung der Behälter in den Produktionsanlagen stören und/oder die Bild gebende Inspektion bestimmter Behälterbereiche einschränken können. Ebenso sind derartige Transponder vergleichsweise teuer, so dass sie von beschädigten oder anderweitig ungeeigneten Testbehältern zum Zwecke der Wiederverwendung zerstörungsfrei abmontiert werden müssen. Ferner ist das Auslesen der Transponder relativ langsam. Ihre Speicherkapazität beträgt zudem in der Regel lediglich vier Bit.

Bekannte Reflexfolien haben in der Regel eine Speicherkapazität von nur einem Bit. Dies ist jedoch bei komplexen Inspektionssystemen zu wenig, insbesondere um verschiedene Merkmale der Testbehälter zuverlässig zu unterscheiden.

Bei den vorstehend erwähnten Testflaschen und Testverfahren besteht ferner das grundsätzliche Problem, dass Veränderungen an den Testbehältern, beispielsweise durch Verschmutzung, Beschädigung oder unbefugte Manipulation, falschpositive Kontrollergebnisse verursachen können. Die Verlässlichkeit der Überprüfung ist insbesondere dann eingeschränkt, wenn mehrere Testmerkmale auf einem Behälter vorgesehen sind.

Es besteht somit der Bedarf für Testvorrichtungen und entsprechende Verfahren, mit denen wenigstens eines der obigen Probleme beseitigt oder zumindest abgemildert werden kann.

Die gestellte Aufgabe wird mit einer Vorrichtung umfassend wenigstens einen Testbehälter und ein Lesegerät zum Lesen eines auf dem Testbehälter vorgesehen Datenträgers gemäß Anspruch 1 gelöst. Demnach wird Information zur Identifizierung des Testbehälters in Form eines mehrdimensionalen Codes auf dem Datenträger gespeichert. Der Testbehälter entspricht grundsätzlich einem während der laufenden Produktion zu prüfenden Produktbehälter, wie beispielsweise einer Getränkeflasche. Charakterisierende Informationen im Sinne der Erfindung sind beispielsweise die Lage, Form und/oder Größe von Testmerkmalen und/oder Transmissionswerte, Reflexionswerte einer Messstrahlung und dergleichen.

Der mehrdimensionale Code ist vorzugsweise ein zweidimensionaler Code. In einer weiteren bevorzugten Variante ist der Code dreidimensional.

Unter dem zweidimensionalen Code ist nach allgemein gültiger Definition eine optisch lesbare Schrift zu verstehen, die beispielsweise aus verschieden Strichen, Punkten und dergleichen sowie dazwischen liegenden, deutlich abgegrenzten Lücken besteht. Daten sind hierbei im Gegensatz zu herkömmlichen, eindimensionalen Strichcodes nicht nur entlang einer Richtung codiert sondern entlang zwei zueinander orthogonaler Richtungen und/oder bestehen aus wenigstens zwei in der Fläche gestapelten eindimensionalen Codes, die gemeinsam ausgelesen werden können. Der Begriff Code steht hier stellvertretend für ein Abbild von Daten unter Verwendung bestimmter Symbole.

Der dreidimensionale Code basiert auf dem vorstehend beschriebenen zweidimensionalen Code. Die Codierung in der dritten Dimension wird vorzugsweise durch Modulation der Information in einer dritten Raumdimension realisiert, beispielsweise durch Tiefenmodulation. Der dreidimensionale Code kann insbesondere in Form eines Hologramms bereitgestellt werden. Dadurch lassen sich Codes mit hoher Informationsdichte realisieren.

Alternativ könnte die dritte Dimension nicht räumlich sondern als zusätzliche Farbinformation bereitgestellt werden. Der dreidimensionale Code entspräche dann einem mehrfarbigen zweidimensionalen Code. Mit diesem lässt sich in der Regel eine geringere Informationsdichte realisieren als mit einem räumlichen dreidimensionalen Code. Mehrfarbige Codes lassen sich jedoch vergleichsweise einfach und kostengünstig herstellen. Mehrdimensionale Codes könnten auch als Kombination der vorstehend beschriebenen Varianten ausgebildet sein.

Demgegenüber lassen sich zweidimensionale Codes besonders einfach in Testvorrichtungen einbinden, da standardisierte Codierungsschriften und Lesegeräte verwendet werden können.

Mit den erfindungsgemäßen Codes kann die Information über den Testbehälter auf einer kleinen Fläche untergebracht werden. Dadurch lässt sich der Datenträger auf einfache Weise an für Lesegeräte gut zugänglichen Stellen des Testbehälters und in ausreichendem Abstand von Testmerkmalen anbringen, so dass deren Inspektion nicht behindert wird und eine gegenseitige Störung von Lesevorgängen und Inspektionsvorgängen vermieden werden kann. Umgekehrt wird die Speicherkapazität des erfindungsgemäßen Datenträgers gegenüber bekannten Transpondern und Reflexfolien auf einfache Weise erhöht. Dadurch lassen sich vielfältige Informationen zur Charakterisierung von Testmerkmalen sowie zur Identifizierung des Testbehälters auf den Datenträgern speichern.

Insbesondere zweidimensionale Codes können mit optischen Lesegeräten, wie beispielsweise Kamera-Scannern, auf bekannte Weise maschinell gelesen und elektronisch weiterverarbeitet werden. Insbesondere lassen sich die Datenträger in der erfindungsgemäßen Vorrichtung beim Durchlaufen des Testbehälters in einem kontinuierlichen Produktstrom automatisch auslesen.

Vorzugsweise ist der mehrdimensionale Code auf dem Testbehälter umfänglich verteilt mehrfach vorgesehen, insbesondere wenigstens fünffach. Besonders günstig ist eine umfänglich gleichmäßige Verteilung der Codes auf dem Datenträger. Bei einer bevorzugten Variante sind beispielsweise sechs Codes in umfänglichen Intervallen zu je 60° auf dem Testbehälter vorgesehen. Somit kann der mehrdimensionale Code unabhängig von der Drehlage des Testbehälters bezüglich seiner Hauptachse von seitlich positionierten Lesegeräten zuverlässig ausgelesen werden.

Beispielsweise kann der Datenträger streifenförmig und im Wesentlichen vollumfänglich an dem Testbehälter vorgesehen sein. Zwischen benachbarten Codes ist dann eine ausreichend breite Lücke vorgesehen, die beispielsweise wenigstens so groß ist wie die Breite des Codes in umfänglicher Richtung. Dadurch kann der Code besonders zuverlässig von Lesegeräten erkannt werden. Streifenförmige Datenträger vereinfachen eine korrekte Positionierung der einzelnen Codes auf dem Testbehälter. Die erfindungsgemäßen Codes müssen jedoch nicht zwingend auf einem gemeinsamen Trägermaterial vorgesehen sein.

Vorzugsweise umfasst der Datenträger eine mit dem mehrdimensionalen Code bedruckte Folie, die insbesondere selbstklebend ist. Dadurch lässt sich der Datenträger besonders kostengünstig und auf einfache Weise herstellen und anbringen. Eine Wiederverwertung des erfindungsgemäßen Datenträgers erübrigt sich daher. Auch lässt sich die Information über den Testbehälter bei Bedarf durch Überkleben mit einem neuen Datenträger wiederherstellen oder aktualisieren. Unter Folie ist im Sinne der Erfindung jedes zur Etikettierung geeignete bedruckbare Trägermaterial aus Kunststoff, Metall, Papierwerkstoffen und Verbundmaterialien daraus gemeint. Der Aufdruck ermöglicht eine besonders flexible und kostengünstige Herstellung der Datenträger. Es wäre generell auch ein Direktbedrucken der Testbehälter mit den mehrdimensionalen Codes denkbar.

Vorzugsweise ist der mehrdimensionale Code ein standardisierter optisch auslesbarer zweidimensionaler Code, insbesondere ein Matrix-Code, ein Punktcode oder ein gestapelter Code. Dadurch lassen sich herkömmliche Lesegeräte und Leseverfahren einsetzen. Geeignete Matrix-Codes sind beispielsweise der Quick-Response-Code, der DataMatrix-Code, der Maxi-Code, der Aztec-Code und der Semacode. Matrix-Codes eignen sich insbesondere für Bild gebende Abtastverfahren. Dies ermöglicht ein von der Ausrichtung des Codes weitgehend unabhängiges und zuverlässiges Lesen der gespeicherten Information. Geeignete Punktcodes sind beispielsweise der Dot Code A, der Snowflake Code und der BeeTagg. Punktcodes benötigen besonders wenig Platz und geringen Kontrast zum Hintergrund. Geeignete gestapelte Codes sind beispielsweise der Codablock, Code 49, Portable Data File 417. Insbesondere letzterer lässt sich auch mit Laserscannern auslesen, die keine Matrixsymbole erfassen können.

Vorzugsweise ist der mehrdimensionale Code dunkel kontrastierend gegenüber einer reflektierenden Schicht ausgebildet. Die reflektierende Schicht ist insbesondere Bestandteil einer Trägerfolie. Deren Reflektionseigenschaften sind dann insbesondere derart ausgebildet, dass der Testbehälter beim Durchlaufen einer Lichtschranke anhand eines charakteristischen, insbesondere gerichteten Lichtreflexes von weniger oder andersartig reflektierenden Produktbehältern unterschieden werden kann. Somit repräsentiert der dunkle Aufdruck die gespeicherte Information, während sich anhand des reflektierenden Hintergrunds des Datenträgers das Vorhandensein des Testbehälters feststellen lässt, beispielsweise stromabwärts der erfindungsgemäßen Vorrichtung. Damit lässt sich überprüfen, ob ein in den Produktstrom eingeschleusterTestbehälter nach der Inspektion wieder ordnungsgemäß aus diesem ausgesondert wurde. Das Vorhandensein des Testbehälters lässt sich hierbei ohne ein Lesen des Codes feststellen.

Vorzugsweise umfasst die Information auf dem Datenträger wenigstens einen dem Testmerkmal zugeordneten Referenzwert, insbesondere einen Vergleichswert und/oder Sollwert, der insbesondere dem Testbehälter individuell zugeordnet ist.

Erfindungsgemäß ist Information zur Identifizierung des Testbehälters vorgesehen. Mit Hilfe der Leseeinheit ordnet die erfindungsgemäße Vorrichtung den Testbehältern zugehörige Referenzwerte individuell zu und leitet daraus Sollwerte für die Inspektion der Testmerkmale ab.

Die Wahrscheinlichkeit einer fehlerhaften Zuordnung einzelner Referenzwerte wird somit reduziert. Information über die Testbehälter und/oder Testmerkmale könnte auch an anderer Stelle gespeichert werden, beispielsweise zentral in einer Auswerteeinheit, und nach der Identifizierung der Behälter den jeweiligen Testmerkmalen zugeordnet werden.

Somit lassen sich den Testmerkmalen, die beispielsweise eine Verschmutzung oder Beschädigung simulieren, quantifizierbare Eigenschaften zuordnen, die die Aussagekraft der Testinspektionen erhöht und Manipulationen von Testergebnissen erschwert. Prüfergebnisse können für jeden Testbehälter und für jedes Testmerkmal individuell und unverwechselbar mit Sollwerten verglichen werden. Insbesondere lassen sich einzelne Testmerkmale mit größerer Zuverlässigkeit erkennen und unterscheiden sowie Abweichungen von vorgegebenen Prüfkriterien genauer messen.

Vorzugsweise charakterisieren die Referenzwerte die Testmerkmale hinsichtlich ihrer Abmessungen und/oder ihrer Position auf dem Testbehälter und/oder einer Wechselwirkung mit einer Messstrahlung zur Inspektion der Produktbehälter. Beispielsweise können für einzelne Testmerkmale Abmessungen, wie Länge, Höhe, maximaler Durchmesser und dergleichen spezifiziert werden. Ebenso kann ein charakteristischer Umriss des jeweiligen Testmerkmals angegeben werden, beispielsweise eine geometrische Form und dergleichen. Die Position einzelner Testmerkmale, beispielsweise die vertikale Position auf der Behälterseitenwand oder die radiale Position auf dem Behälterboden, kann quantifiziert werden, im Gegensatz zu einer rein qualitativen Angabe, wie beispielsweise im Sinne von: Testbehälter zur Seitenwandkontrolle oder Bodenkontrolle.

Vorzugsweise wird auch die Wechselwirkung des Testmerkmals mit einer Messstrahlung als Referenzwert spezifiziert. Darunter sind beispielsweise ein Absorptionsgrad, ein Transmissionsgrad und/oder ein Reflexionsgrad der Messstrahlung zu verstehen. Es kann auch die mit dem Testmerkmal beabsichtigte Beeinflussung eines Messsignals der Behälterinspektionseinheit angegeben werden oder ein anderes quantifizierbares Sollergebnis wie beispielsweise eine Angabe im Sinne von lichtundurchlässig oder dergleichen.

Vorzugsweise sind auf dem Testbehälter mehrere Testmerkmale zur Überprüfung unterschiedlicher funktioneller Bereiche eines entsprechenden Produktbehälters vorgesehen. Dadurch müssen weniger unterschiedliche Testbehälter vorgehalten werden. Durch Spezifikation einzelner Testmerkmale können diese bei der Überprüfung von Behälterinspektionseinheiten voneinander unterschieden werden, um unerwünschte Wechselwirkungen und/oder Störungen durch jeweils benachbarte Testmerkmale zu vermeiden. Die Testbehälter werden beispielsweise durch Anbringen der Testmerkmale auf einem Produktbehälter hergestellt.

Vorzugsweise ist wenigstens ein Testmerkmal im Bereich der Seitenwand des Testbehälters und/oder im Bereich des Bodens des Testbehälters und/oder im Bereich eines Verschlussgewindes des Testbehälters und/oder im Bereich einer Verschlussdichtfläche angebracht. Dadurch lassen sich unterschiedliche Testmessungen mit einem einzelnen Testbehälter durchführen oder miteinander kombinieren. Es kann jedoch auch ausreichend sein, wenigstens Referenzwerte zur Größe und zur Messsignalabschwächung des Testmerkmals bereitzustellen. Damit lässt sich bei nur geringer Datenmenge bereits eine nennenswerte Erhöhung der Prüfqualität für jeden einzelnen Testbehälter erzielen. Dies ist insbesondere bei einer Speicherung der Referenzwerte auf Identifizierungsmarken mit vergleichsweise geringer Datendichte von Vorteil, beispielsweise bei Reflexfolien und dergleichen.

Bei einer weiteren besonders günstigen Ausführungsform ist das Testmerkmal eine bis auf einen vorgegebenen Füllstand in den Testbehälter eingefüllte Flüssigkeit. Dadurch läst sich beispielsweise eine Einheit zur Laugenerkennung besonders zuverlässig überprüfen. Beispielsweise kann eine zuvor von der Flüssigkeit unter ordnungsgemäßen Bedingungen verursachte Strahlabschwächung gemessen werden und individuell für den Testbehälter als Referenzwert oder Sollwert angegeben werden.

Vorzugsweise umfassen die Referenzwerte Angaben zur Höhe des vorgegebenen Füllstands und/oder einer Messstrahlabschwächung durch die Flüssigkeit. Diese Referenzwerte könnten zuvor gemessen werden und individuell für den Testbehälter gespeichert werden, beispielsweise auf der Identifizierungsmarke. Dies schafft zusätzliche Sicherheit gegenüber einer Manipulation des Testbehälters.

Bei einer besonders günstigen Ausführungsform ist der Testbehälter und/oder ist das Testmerkmal mit einem Siegel versehen. Das Siegel schützt das Testmerkmal gegen Manipulation. Vorzugsweise ist das Siegel so ausgebildet, dass eine Manipulation einen erkennbaren Siegelbruch verursacht. Dieser könnte visuell und/oder maschinell erkannt werden.

Eine besonders günstige Ausführungsform umfasst eine Auswerteeinheit zum Ermitteln wenigstens eines Sollwerts auf Grundlage der von dem Datenträger gelesenen Information, und zum Vergleichen des Sollwerts mit einem an dem wenigstens einem Testmerkmal in der Behälterinspektionseinheit ermittelten Messergebnis. Insbesondere lassen sich unzulässige und zulässige Abweichungen von Sollwerten unterscheiden und/oder zulässige Abweichungen bezüglich eines Fehlerwahrscheinlichkeit klassifizieren und/oder in eine Fehleranalyse integrieren.

Bei Überschreiten einer zulässigen Abweichung des Messergebnisses kann beispielsweise ein Warnsignal ausgegeben werden. Daraufhin kann ein Bediener einen beanstandeten Testbehälter überprüfen und bei Bedarf gegen einen ordnungsgemäßen Testbehälter austauschen. Ebenso kann eine Fehlerdiagnose an der Inspektionseinheit eingeleitet werden.

Eine besonders günstige Ausführungsform der erfindungsgemäßen Vorrichtung ist ferner ausgebildet, die Behälterinspektionseinheit nach Anmelden oder Erkennen des Testbehälters, insbesondere durch Lesen des Datenträgers, automatisch in einen Betriebszustand zur Testinspektion des Testbehälters zu versetzen. Es erfolgt dann insbesondere ein automatischer Wechsel aus einem Betriebsmodus zur Inspektion der Produktbehälter. Somit lässt sich die Überprüfung der Behälterinspektionseinheit automatisch in einen laufenden Produktionsprozess integrieren, bei minimaler Störung des Produktionsbetriebs und maximaler Verbesserung der Zuverlässigkeit der Überprüfung.

Gelöst wird die gestellte Aufgabe ferner mit einem Verfahren zum Überprüfen der Funktionsfähigkeit einer Behälterinspektionseinheit, mit den im Anspruch 15 definierten Schritten.

Vorzugsweise wird das Auslesen des Datenträgers in Abhängigkeit von der Position des Testbehälters getriggert. Dadurch wird die Zuverlässigkeit des Lesens erhöht. Möglich ist aber auch eine frei laufende, also von der Position unabhängige Betriebsweise. Die Datenübertragung von der Leseeinheit zu einer zentralen Nachverfolgungseinheit für Behälter und/oder zu einer Auswerteeinheit erfolgt vorzugsweise über einen Feldbus.

Vorzugsweise wird der erfindungsgemäße Testbehälter in einem Strom aus Produktbehältern zugeführt und nach der Überprüfung der Behälterinspektionseinheit aus dem Strom ausgesondert, wobei das Vorhandensein eines nicht ordnungsgemäß ausgesonderten Testbehälters stromabwärts mittels eines charakteristischen Lichtschrankenreflexes, insbesondere an dem Datenträger festgestellt wird. Dadurch kann auf einfache Weise verhindert werden, dass der Testbehälter in dem Produktstrom weiter verarbeitet wird. Insbesondere kann die Produktion zu diesem Zweck automatisch angehalten oder unterbrochen werden, um den Testbehälter auszusondern.

Vorzugsweise umfasst das Verfahren ferner einen Schritt des Abspeicherns von Vergleichsergebnissen einzelner Testinspektionen. Dies ermöglicht eine umfassende Auswertung der Testinspektionen zu einem späteren Zeitpunkt oder einen Vergleich mit zuvor erhobenen Daten.

Eine besonders günstige Ausführungsform umfasst ferner einen Schritt des Auswertens einer zeitlichen Abfolge von Vergleichsergebnissen, die an einem bestimmten Testmerkmal oder an einander entsprechenden Testmerkmalen unterschiedlicher Testbehälter ermittelt wurden. Dadurch lässt sich eine zeitlicher Verlauf von Vergleichsergebnissen über mehrere, im laufenden Produktstrom zeitlich geeignet verteilte Testinspektionen beurteilen. Beispielsweise kann ein Trend zu einer sich kontinuierlich anbahnenden Fehlfunktion erkannt werden, bevor der die Fehlfunktion im laufenden Produktstrom tatsächlich auftritt. Die Produktsicherheit kann dadurch zusätzlich erhöht werden.

Bevorzugte Ausführungsformen der Erfindung sind in der Zeichnung dargestellt. Es zeigen:
Fig. 1 eine schematische Seitenansicht einer ersten Ausführungsform eines erfindungsgemäßen Testbehälters;
Fig. 2 eine schematische Ansicht eines erfindungsgemäßen Datenträgers;
Fig. 3 eine schematische Seitenansicht einer zweiten Ausführungsform eines erfindungsgemäßen Testbehälters; und
Fig. 4 eine Ausführungsform der erfindungsgemäßen Vorrichtung zum Überprüfen von Behälterinspektionseinheiten.

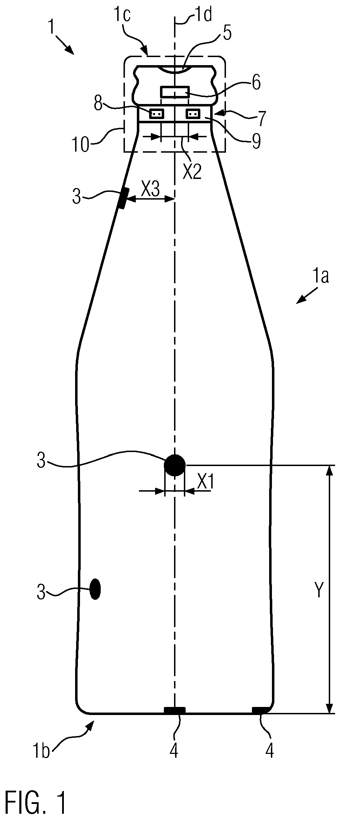

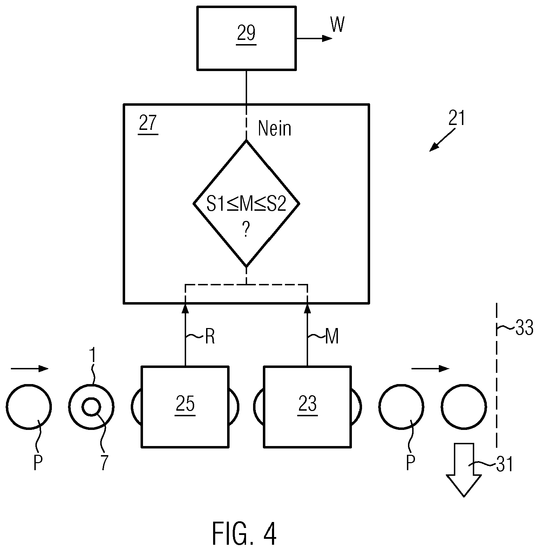

Wie die Fig. 1 und 4 erkennen lassen, sind an einer ersten Ausführungsform 1 des erfindungsgemäßen Testbehälters zur Überprüfung einer Inspektionseinheit 23 für entsprechende Produktbehälter P beispielhaft mehrere erste Testmerkmale 3 zur Simulation einer Verunreinigung und/oder Beschädigung in einem Seitenwandbereich 1a des Testbehälters 1 vorgesehen, zweite Testmerkmale 4 zur Simulation einer Verunreinigung und/oder Beschädigung im Bodenbereich 1b, ein drittes Testmerkmal 5 zur Simulation einer Verunreinigung und/oder Beschädigung einer oberen Dichtfläche im Mündungsbereich 1c und ein viertes Testmerkmal 6 zur Simulation einer Verunreinigung und/oder Beschädigung in einem seitlichen Abschnitt des Mündungsbereichs 1c. Dies könnte beispielsweise auch ein Gewindeabschnitt sein. Die Testmerkmale 3 bis 6 dienen somit generell der Simulation von Fehlerquellen an den entsprechenden Produktbehältern P. Der Testbehälter 1 kann in bekannter Weise aus Glas oder Kunststoff gefertigt sein.

Die Anzahl und Position der ersten bis vierten Testmerkmale 3 bis 6 könnte in beliebiger Weise vom gezeigten Beispiel abweichen. Ebenso müssen nicht alle genannten funktionellen Bereiche 1a bis 1c des Testbehälters 1 mit Testmerkmalen 3 bis 6 belegt sein. Im gezeigten Beispiel ist eine Testflasche mit einem Kronkorkenverschluss angedeutet. Genau so gut könnte es sich um eine Testflasche mit Schraubverschluss handeln. In diesem Fall könnte beispielsweise das vierte Testmerkmal 6 ein Materialausbruch zur Gewindekontrolle sein und/oder weitere Testmerkmale vorgesehen sein.

Die ersten bis vierten Testmerkmale 3 bis 6 sind auf dem Testbehälter 1 an definierten Positionen und in vorgegebenen Größen vorgesehen, beispielsweise in Form von Aufklebern, Aufdrucken, Materialausbrüchen und dergleichen. Diese Testmerkmale 3 bis 6 werden, sofern technisch möglich oder praktikabel, vorzugsweise im Inneren des Testbehälters 1 angebracht, um eine Abnutzung, Beschädigung oder Manipulation durch Einwirkung von außen zu erschweren. Erfindungsgemäße Testmerkmale können aber auch auf der Außenseite des Testbehälters 1 durch gezielte mechanische Beschädigungen erzeugt werden, beispielsweise als Gewindeunterbrechungen in Form vollständiger und glatter Ausbrüche, oder Dichtflächenbeschädigungen.

Die Position der Testmerkmale 3 bis 6 ist beispielhaft anhand der vertikalen Position Y eines der ersten Testmerkmale 3 angedeutet, die Abmessungen der Testmerkmale 3 bis 6 beispielhaft anhand eines zugehörigen Durchmessers X1 und der Länge X2 des vierten Testmerkmals 6. Die Position einzelner Testmerkmale 3 bis 6 könnte jedoch auch durch eine seitliche oder radiale Position X3, beispielsweise gemessen von der Hauptachse 1d des Testbehälters 1 definiert sein, durch eine Drehlage (nicht gezeigt) um die Hauptachse 1d bezogen auf eine Transportrichtung oder einen bestimmten Bezugspunkt, durch Koordinaten in einer bestimmten Ansicht des Testbehälters 1 oder dergleichen. Die Größe einzelner Testmerkmale 3 bis 6 könnte auch durch Seitenlängen bei polygonal geformten Testmerkmalen, durch Längen von Haupt- und Nebenachsen bei ovalen Testmerkmalen oder dergleichen definiert sein.

Die Testmerkmale 3 bis 6 können transparent, teiltransparent oder opak sein, je nach zu simulierender Fehlerquelle. Es ist auch möglich, unterschiedliche Testmerkmale in einem Inspektionsbereich des Testbehälters 1 zu kombinieren, beispielsweise teiltransparente und opake Testmerkmale 4 im Bodenbereich 1b. Vorzugsweise haben die Testmerkmale 3 bis 6 eine für eine zur Inspektion der Produktbehälter P verwendete Messstrahlung bekannte spezifische oder absolute Strahlabschwächung, die dem jeweiligen Testmerkmal 3 bis 6 als Referenzwert zugeordnet werden kann. Die Messstrahlung ist beispielsweise Licht oder Hochfrequenzstrahlung. An dem Testbehälter 1 ist ferner ein Datenträger 7 mit mehreren umfänglich verteilten, im Wesentlichen gleichartigen zweidimensionalen Codes 8 vorgesehen. Diese enthalten Information über den Testbehälter 1 und die Testmerkmale 3 bis 6. Die Codes 8 könnten ebenso mehrdimensional ausgebildet sein, beispielsweise als räumliche dreidimensionale Codes 8 in Form von Hologrammen. Nachfolgend werden stellvertretend zweidimensionale Codes 8, beispielsweise in Form zweidimensional kodierter Schwarz-Weiß-Muster, beschrieben.

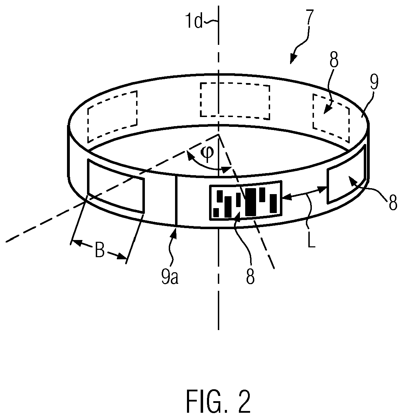

Wie in der Fig. 2 schematisch gezeigt ist, besteht der Datenträger 7 vorzugsweise aus einer streifenförmigen, insbesondere selbstklebenden Trägerfolie 9, die mit den umfänglich verteilten Codes 8 bedruckt ist (der Einfachheit halber ist deren Druckmuster nur an einer einzigen umfänglichen Position angedeutet). Beispielsweise können als Trägerfolie 9 herkömmliche Klebebänder, Etiketten und dergleichen verwendet werden. Nach dem Bedrucken werden diese vorzugsweise vollumfänglich an dem Testbehälter 1 angebracht, wobei die Enden der Trägerfolie 9 beispielsweise in einem schematisch angedeuteten Bereich 9a überlappen oder aneinander stoßen können. Für die Trägerfolie 9 eignen sich insbesondere diffus oder gerichtet reflektierende Materialien, die einen hellen Hintergrund für den zweidimensionalen Code 8 ausbilden, der demgegenüber in Form dunkler Symbole, beispielsweise Punkte und Streifen, scharf abgegrenzt kontrastiert. Es können dann standardisierte Leseverfahren zum Einsatz kommen. Prinzipiell ist aber auch eine Kontrastinvertierung der Codes 8 denkbar.

Der Datenträger 7 wird zur besseren Ablesbarkeit vorzugsweise konzentrisch um die Hauptachse 1d des Testbehälters 1 angebracht. Die einzelnen Codes 8 sind derart umfänglich verteilt, dass die für die erfindungsgemäße Inspektion des Testbehälters 1 benötigte Information unabhängig von der Drehlage des Testbehälters 1 aus einer vorgegebenen seitlichen Richtung, entsprechend der Ausrichtung eines zugeordneten Lesegeräts 25, von dem Datenträger 7 ausgelesen werden kann. Hierzu ist der Code 8 im Ausführungsbeispiel der Fig. 2 beispielhaft sechsfach in umfänglichen Winkelintervallen ϕ zu je 60° vorgesehen. Die Lücke L zwischen benachbarten Codes 8 ist vorzugsweise mindestens so groß wie die Breite B der einzelnen Codes 8. Dadurch lässt sich der dem Lesegerät 25 jeweils am meisten zugewandte Code 8 besonders zuverlässig auslesen. Die Lücke L kann jedoch je nach Größe der Codes 8, dem Leseabstand, der Transportgeschwindigkeit der Testbehälter 1, dem Kontrast des Codes 8 und dergleichen von den obigen Bedingungen abweichen. Auch könnten die Codes 8 mittels separater Trägerfolien 9 und/oder in einer von den beschriebenen Beispielen abweichenden Anzahl an dem Testbehälter 1 angebracht werden.

Auf dem Datenträger 7 ist Information zur individuellen Identifizierung der einzelnen Testbehälter 1 gespeichert. Vorzugsweise sind auf dem gleichen Datenträger 7 ferner Referenzwerte R der Testmerkmale 3 bis 6 gespeichert. Die Referenzwerte R und/oder zusätzliche Information, insbesondere solche, die veränderliche Zustände und Eigenschaften widerspiegeln, könnten jedoch auch an beliebiger anderer Stelle gespeichert sein, sofern deren eindeutige und rechtzeitige Zuordnung zum Testbehälter 1 gewährleistet ist.

Die erfindungsgemäßen Referenzwerte R dienen der Quantifizierung von Fehlern, die von den einzelnen Testmerkmalen 3 bis 6 im Rahmen von Testinspektionen simuliert und bei ordnungsgemäßer Funktion der überprüften Inspektionseinheit 23 von dieser erkannt werden sollen. Die Referenzwerte R können entweder Sollwerte für die Testinspektion des Testbehälters 1 sein oder als Berechnungsgrundlage dienen, um einen Sollwert oder ein anderes Sollergebnis der Testinspektion zu definieren. Beispielsweise könnten die Abmessungen und/oder Positionen einzelner Testmerkmale 3 bis 6 als Referenzwerte R verwendet werden, um damit ein bestimmtes Bildmuster bei der Bild gebenden Auswertung der Testinspektion als Sollergebnis zu definieren.

Die Referenzwerte R umfassen beispielsweise die oben beschriebenen Positionsangaben und/oder Größenangaben X1 - X3, Y der Testmerkmale 3 bis 6 und/oder Angaben zur Soll-Wechselwirkung der Testmerkmale 3 bis 6 mit einer Messstrahlung zur Inspektion entsprechender Produktbehälter P. Geeignete Referenzwerte R sind beispielsweise Werte oder Bereiche der Strahlabschwächung, Transmission oder des Reflexionsgrads eines Testmerkmals 3 bis 6, die bei ordnungsgemäßem Zustand der überprüften Inspektionseinheit 23 auftreten. Allerdings müssen die erfindungsgemäßen Referenzwerte R nicht zwangsläufig auf den Testbehältern 1 selbst gespeichert sein, sondern können beispielsweise zentral gespeichert werden und nach Identifizierung einzelner Testbehälter 1 diesen für die Testinspektion zugeordnet werden. Außerdem könnte die Information über den Testbehälter 1 und die Referenzwerte R auf mehrere Datenträger 7 verteilt sein. Besonders vorteilhaft ist jedoch die beschriebene Variante, bei der die Information durch Auslesen eines einzelnen zweidimensionalen Codes 8 bereitgestellt wird. Geeignet sind hierfür insbesondere standardisierte zweidimensionale Matrix-Codes, wie beispielsweise der Datamatrix-Code.

Die Abmessungen geeigneter erster Testmerkmale 3 liegen beispielsweise im Bereich von 3 bis 5 mm für den Durchmesser X1, zwischen 1 und 5 mm bei Dichtflächenbeschädigungen und zwischen 5 und 10 mm bei Gewindeunterbrechungen.

Umfassen die Produktbehälter P Bereiche mit Prägungen, Beschriftungen, Rillen und dergleichen, so werden die Testmerkmale 3 bis 6 auf den Testbehältern 1 vorzugsweise mit einem Mindestabstand von 10 mm zu derartigen Strukturen vorgesehen, um eine ausreichende Messgenauigkeit für die Testinspektion der Testbehälter 1 zu gewährleisten.

In der Fig. 1 ist gestrichelt ferner ein optionales Siegel 10 schematisch angedeutet, beispielsweise in Form einer transparenten Schutzkappe, mit dem die Testmerkmale 3 bis 6 gegen eine unbefugte Manipulation geschützt werden können. Das Siegel 10 ist vorzugsweise derart ausgebildet, dass ein Siegelbruch augenscheinlich ist und/oder ein bei der Überprüfung des Testbehälters 1 registriertes Messsignal auf charakteristische Weise ändert, um einen Bediener auf einen Siegelbruch aufmerksam zu machen.

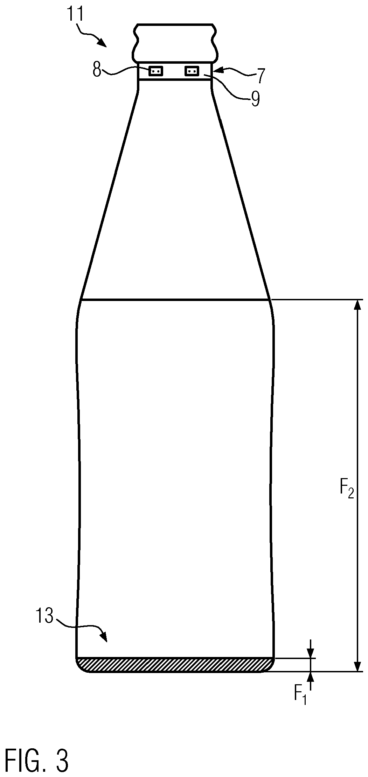

Die Fig. 3 zeigt eine zweite Ausführungsform 11 des erfindungsgemäßen Testbehälters, der sich von der ersten Ausführungsform durch die Art des Testmerkmals 13 in Form einer in den Testbehälter 11 bis zu einem vorgegebenen Füllstand F1 oder F2 eingefüllten Flüssigkeit, beispielsweise Wasser, unterscheidet.

Mit der zweiten Ausführungsform 11 lässt sich beispielsweise eine Inspektionsvorrichtung zur Laugenkontrolle überprüfen. Auch hier enthält der Datenträger 7 mehrdimensionale, insbesondere zweidimensionale Codes 8 mit Information zum Testbehälter 11, vorzugsweise umfassend wenigstens einen Referenzwert R des Testmerkmals 13, beispielsweise den Füllstand F1 oder F2 und/oder einen charakteristischen Wert für ein bei ordnungsgemäßer Funktion der überprüften Inspektionseinheit erwartetes Messsignal, beispielsweise entsprechend einer Strahlabschwächung.

Die Fig. 4 verdeutlicht eine Ausführungsform der erfindungsgemäßen Vorrichtung 21 zur Überprüfung von Behälterinspektionseinheiten mit den erfindungsgemäßen Testbehältern.

Demnach dient die erfindungsgemäße Vorrichtung 21 beispielsweise zur Überprüfung einer Inspektionseinheit 23 zur Seitenwandkontrolle von Produktbehältern P, wie beispielsweise Getränkeflaschen, und umfasst eine Leseeinheit 25, die die Datenträger 7 lesen und gegebenenfalls auch im Produktstrom automatisch erkennen kann. Das Lesen des Datenträgers 7 kann jedoch auch positionsgesteuert beim Einlaufen des Testbehälters 1, 11 ausgelöst werden, beispielsweise auf der Grundlage einer bekannten Relativposition des Testbehälters 1, 11 bezüglich der Produktbehälter P.

Es ist ferner eine Auswertevorrichtung 27 vorgesehen, die mit der Inspektionseinheit 23 an den Testbehältern 1 erhobene Messwerte M mit Sollergebnissen vergleicht, die den erfindungsgemäßen Referenzwerten R entsprechen können oder aus diesen berechnet werden. Beispielsweise wird überprüft, ob die an einem der Testmerkmale 3 des Testbehälters 1 gemessenen Werte M innerhalb eines mit Hilfe der Referenzwerte R definierten Sollbereichs S1 bis S2 liegen, der die Funktionstüchtigkeit der Inspektionseinheit 23 charakterisiert. Alternativ sind beliebige Vergleichskriterien denkbar.

Liegen Messwerte M außerhalb zugehöriger Sollbereiche, wird beispielsweise eine Warnmeldung W mittels einer ebenfalls vorgesehen Ausgabeeinheit 29 erzeugt. Dies kann ein akustischer Alarm sein, eine Meldung auf einem Bildschirm und dergleichen.

Stromabwärts der Inspektionseinheit 23 ist vorzugsweise ein Ausleitbereich 31 vorgesehen, in dem die Testbehälter 1, 11 aus dem Strom der Produktbehälter P wieder ausgesondert werden, um eine Verarbeitung der Testbehälter 1, 11 zu vermeiden. Stromabwärts des Ausleitbereichs 31 kann ferner eine Kontrolleinheit 33, beispielsweise eine Reflektionslichtschranke, vorgesehen sein, um nicht ordnungsgemäß aus dem Produktstrom ausgesonderte Testbehälter 1, 11 zu erkennen. Der dafür benötigte auslösende Lichtreflex kann an den Testbehältern 1, 11 an dem Datenträger 7 erzeugt werden, sofern dieser eine ausreichend reflektierende Trägerfolie 9 umfasst. Voraussetzung ist hierbei lediglich, dass sich das Reflektionsvermögen der Trägerfolie 9 ausreichend von dem Reflektionsvermögen der Produktbehälter P unterscheidet. Ein Auslesen des Datenträgers 7 ist an dieser Stelle entbehrlich.

Erfindungsgemäße Referenzwerte R, beispielsweise umfassend einzelne Positionsangaben und/oder Größenangaben X1 - X3, Y, F1, F2 der Testmerkmale 3 bis 6 und 13, könnten je nach Bedarf, beispielsweise in Abhängigkeit der benötigten Datenmenge oder zur Plausibilitätskontrolle, auch in der Leseeinheit 25, der Auswerteeinheit 27, der Inspektionseinheit 23 und/oder einem geeigneten zentralen Speichermedium gespeichert werden (nicht dargestellt). Es wäre dann prinzipiell ausreichend, die Testbehälter 1, 11 mit der Leseeinheit 25 zu identifizieren und die Referenzwerte R aus dem jeweiligen Speichermedium auszulesen und dem Testbehälter 1, 11, insbesondere seinen einzelnen Testmerkmalen 3 bis 6, 13 zuzuordnen.

Vorzugsweise werden mehrere Testbehälter 1, 11 mit separaten Datensätzen zur Identifizierung der Behälter 1, 11 und/oder zur Charakterisierung der Testmerkmale 3 bis 6, 13 vorgehalten. Die Referenzwerte R ermöglichen hierbei im Gegensatz zu einer rein qualitativen Zuordnung der Testbehälter 1, 11 zu einer bestimmten Messaufgabe einen unmittelbaren Vergleich von mittels der Testmerkmale 3 bis 6 gewonnenen Messwerten M mit zulässigen Sollwerten oder Sollwertebereichen S1 bis S2.

Dadurch lassen sich unzulässige Abweichungen unmittelbar quantifizieren, aber auch zulässige Abweichungen klassifizieren und/oder über einen bestimmten Zeitraum beobachten, um einen Trend und/oder eine Plausibilität über mehrere Testinspektionen zu ermitteln und einer fehlerhaften Inspektion der Produktbehälter P im laufenden Produktstrom zuvorzukommen. Beispielsweise werden mehrere Inspektionen eines bestimmten Testmerkmals 3 bis 6 an ein und demselben Testbehälter 1, 11 verglichen oder mehrere Inspektionen einander entsprechender Merkmale 3 bis 6 an unterschiedlichen Testbehältern 1, 11. Insbesondere lässt sich ein bestimmtes Testmerkmal 13, beispielsweise anhand des Referenzwerts R des Füllstands F1, an mehreren Testbehältern 11 in geeigneten zeitlichen Abständen kontrollieren und Abweichungen der Messergebnisse von den jeweiligen Sollergebnissen aufzeichnen und vergleichen.

Wie in der Fig. 4 ebenfalls angedeutet ist, werden die Testbehälter 1, 11 im Rahmen eines Testprogramms in einen durch Pfeile angedeuteten, kontinuierlichen Produktstrom aus Produktbehältern P eingeschleust. Ein Betriebsmodus zur Testinspektion wird beispielsweise automatisch eingeleitet, in dem das Einlaufen der Testbehälter 1, 11 der Leseeinheit 25 gemeldet oder von dieser erkannt wird. Es werden dann vorzugsweise für einzelne Testmerkmale 3 bis 6, 13 individuelle Referenzwerte R aus den Datenträgern 7 ausgelesen. Die Referenzwerte R können hierbei individuell und unverwechselbar für jeden Testbehälter 1,11 bereit gestellt werden. Dies erhöht die Zuverlässigkeit der Überprüfung und erschwert eine unbefugte Manipulation der Überprüfung.

Einzelne Merkmale, insbesondere die Art und Positionierung der Testmerkmale, der beschriebenen Ausführungsformen 1, 11, 21 können beliebig in technisch sinnvoller Weise miteinander kombiniert oder je nach Inspektionstyp ausgetauscht oder weggelassen werden. Ebenso lassen sich die Codes 8 je nach geforderter Informationsdichte und dem Typ der Leseeinheit 25 nicht nur in der an Hand der Ausführungsformen beschriebenen zweidimensionalen Variante realisieren sondern beispielsweise als dreidimensionale Information, insbesondere als Hologramm oder Farbausdruck.

Eine besonders effiziente Form der Funktionskontrolle ergibt sich, falls wenigstens eine der vorstehend beschriebenen Ausführungsformen 1, 11, 21 oder eine geeignete Mischvariante dieser Ausführungsformen im Rahmen eines ersten Testmodus zur Kontrolle der Inspektionsgenauigkeit anhand von individuellen Referenzwerten R mit einem zweiten Testmodus zur Kontrolle der Merkmalserkennung im Sinne einer herkömmlichen Zustandsentscheidung kombiniert wird, wie beispielsweise "Merkmal erkannt" / "Merkmal nicht erkannt". Der erste und der zweite Testmodus könnten in einem vorgegebenen Zeitschema und/oder nach Bedarf abwechseln, beispielsweise in Abhängigkeit einer zuvor ermittelten Fehlerhäufigkeit.

Vorteilhaft ist ferner, falls der erste Testmodus ausschließlich oder überwiegend in Produktionspausen verwendet wird, beispielsweise vor Produktionsbeginn, nach Produktionsschluss, in Betriebspausen, bei Schichtwechseln, bei Produktumstellungen und dergleichen. Der zweite Testmodus erfordert dann ergänzend während der laufenden Produktion lediglich eine Erkennung der jeweiligen Testmerkmale, beispielsweise in regelmäßigen Zeitintervallen.

Mit einer derartigen Arbeitsweise lässt sich der technisch und gegebenenfalls zeitlich aufwändigere erste Testmodus in einen für die Produktion nicht benötigten Zeitraum verlagern. Außerdem kann eine Reduktion der Produktionsleistung durch die Funktionskontrolle insgesamt minimiert werden.

Die erfindungsgemäßen Testbehälter 1, 11 sind vorzugsweise sowohl für den ersten als auch für den zweiten Testmodus geeignet.

Mit dem ersten Testmodus kann insbesondere eine Verbesserung der Qualitätskontrolle erzielt werden. Der zweite Testmodus kann als Routineinspektion in geeigneten Zeitintervallen zwischen Inspektionen des ersten Testmodus beliebig eingefügt werden. Besonders vorteilhaft ist, falls zwischen zwei Inspektionen gemäß des ersten Testmodus wenigstens zwei Inspektionen gemäß des zweiten Testmodus durchgeführt werden.

Somit können mit dem ersten Testmodus besonders anspruchsvolle und aussagekräftige Inspektionskriterien bereit gestellt werden, beispielsweise das Einhalten von Obergrenzen und Untergrenzen, Sollkoordinaten, Kontrastübergängen, Merkmalsformen und dergleichen. Ergänzend können mit dem zweiten Testmodus einfacher auszuwertende Inspektionskriterien bereit gestellt werden, beispielsweise das Über-/Unterschreiten eines einzelnen Grenzwerts. Darunter ist beispielsweise eine bestimmte Strahlabschwächung zu verstehen. Vorteilhaft ist hierbei, dass die Testmerkmale in beiden Testmodi verwendet werden, um die Verlässlichkeit des zweiten Testmodus zu erhöhen.

Hierbei ist die Kombination des ersten Testmodus mit dem zweiten Testmodus als eigenständige Problemlösung für einen besonders effizienten Produktionsablauf mit regelmäßiger und/oder bedarfsabhängiger Funktionsprüfung einer zugeordneten Inspektionseinheit zu verstehen.

Nichtsdestoweniger ist eine Kombination des ersten und zweiten Betriebsmodus mit Merkmalen der beanspruchten Vorrichtungen und Verfahren besonders vorteilhaft.

## Patentansprüche

1. Vorrichtung (21) zum Überprüfen der Funktionsfähigkeit einer Behälterinspektionseinheit (23), mit:
- wenigstens einem Testbehälter (1, 11), an dem wenigstens ein Testmerkmal (3-6, 13) und ein Datenträger (7) mit Information zur Identifizierung des Testbehälters (1, 11) vorgesehen sind; und
- einer Leseeinheit (25) zum Lesen des Datenträgers (7), wobei die Information in Form eines Codes auf dem Datenträger (7) gespeichert ist,
**dadurch gekennzeichnet, dass**
der Code ein standardisierter optisch auslesbarer, mehrdimensionaler Code (8) ist, und die Vorrichtung (21) dazu ausgebildet ist, mit Hilfe der Leseeinheit (25) dem Testbehälter (1, 11) einen Referenzwert (R) individuell zuzuordnen und daraus einen Sollwert für die Inspektion des Testmerkmals (3-6, 13) abzuleiten, insbesondere indem zentral in einer Auswerteeinheit (27) gespeicherte Information über den Testbehälter und/oder das Testmerkmal nach Identifizierung des Testbehälters (1, 11) dem jeweiligen Testmerkmal (3-6, 13) zugeordnet wird.

2. Vorrichtung nach Anspruch 1, wobei der mehrdimensionale Code (8) auf dem Testbehälter (1, 11) umfänglich verteilt mehrfach vorgesehen ist, insbesondere wenigstens fünffach.

3. Vorrichtung nach Anspruch 1 oder 2, wobei der Datenträger (7) eine mit dem mehrdimensionalen Code (8) bedruckte Trägerfolie (9) umfasst, die insbesondere selbstklebend ist.

4. Vorrichtung nach wenigstens einem der vorigen Ansprüche, wobei der mehrdimensionale Code (8) ein Code ist, insbesondere ein Matrix-Code, ein Punktcode oder ein gestapelter Code.

5. Vorrichtung nach wenigstens einem der vorigen Ansprüche, wobei der mehrdimensionale Code (8) dunkel kontrastierend gegenüber einer reflektierenden Schicht ausgebildet ist.

6. Vorrichtung nach wenigstens einem der vorigen Ansprüche, wobei der Code ein zweidimensionaler Code (8) ist.

7. Vorrichtung nach Anspruch 6, wobei der wenigstens eine Referenzwert (R) das zugeordnete Testmerkmal (3-6, 13) hinsichtlich seiner Abmessungen (X1, X2, F1, F2) und/oder seiner Position (X3, Y) auf dem Testbehälter (1, 11) und/oder hinsichtlich einer Wechselwirkung mit einer Messstrahlung charakterisiert.

8. Vorrichtung nach wenigstens einem der vorigen Ansprüche, wobei auf dem Testbehälter (1, 11) mehrere Testmerkmale (3-6, 13) zur Überprüfung unterschiedlicher funktioneller Bereiche (1a-1c) eines dem Testbehälter entsprechenden Produktbehälters (P) vorgesehen sind.

9. Vorrichtung nach wenigstens einem der vorigen Ansprüche, wobei wenigstens ein Testmerkmal (3-6) im Bereich (1a) der Seitenwand des Testbehälters (1) und/oder im Bereich (1b) des Bodens des Testbehälters und/oder im Bereich eines Verschlussgewindes des Testbehälters und/oder im Bereich (1c) einer Verschlussdichtfläche angebracht ist.

10. Vorrichtung nach wenigstens einem der Ansprüche 1 bis 9, wobei das Testmerkmal (13) eine bis auf einen vorgegebenen Füllstand (F1, F2) in den Testbehälter (11) eingefüllte Flüssigkeit ist.

11. Vorrichtung nach Anspruch 10, wobei der Datenträger (7) wenigstens einen Referenzwert (R) zur Höhe des vorgegebenen Füllstands (F1, F2) und/oder zu einer Messstrahlabschwächung durch die Flüssigkeit enthält.

12. Vorrichtung nach wenigstens einem der vorigen Ansprüche, wobei der Testbehälter (1, 11) und/oder das Testmerkmal (3-6, 13) mit einem Siegel (10) versehen ist.

13. Vorrichtung nach wenigstens einem der vorigen Ansprüche, ferner mit einer Auswerteeinheit (27) zum Ermitteln wenigstens eines Sollwerts auf Grundlage der von dem Datenträger (7) gelesenen Information, und zum Vergleichen des Sollwerts mit einem an dem wenigstens einem Testmerkmal (3-6, 13) in der Behälterinspektionseinheit (23) ermittelten Messergebnis (M).

14. Vorrichtung nach wenigstens einem der vorigen Ansprüche, wobei die Vorrichtung ferner ausgebildet ist, die Behälterinspektionseinheit (23) durch Anmelden oder Erkennen des Testbehälters (1, 11), insbesondere durch Lesen des Datenträgers (7), automatisch in einen Betriebszustand zur Testinspektion des Testbehälters (1, 11) zu versetzen.

15. Verfahren zum Überprüfen der Funktionsfähigkeit einer Behälterinspektionseinheit (23) mit der Vorrichtung nach wenigstens einem der vorigen Ansprüche, wobei das Verfahren die folgenden Schritte umfasst:
a) Zuführen des Testbehälters (1, 11);
b) Auslesen des Datenträgers (7);
c) Identifizieren des Testbehälters anhand im Schritt b) ausgelesener Information, wobei dem Testbehälter (1, 11) mit Hilfe der Leseeinheit (25) ein Referenzwert (R) individuell zugeordnet und daraus ein Sollwert für die Inspektion des Testmerkmals (3-6, 13) abgeleitet wird, insbesondere indem zentral in einer Auswerteeinheit (27) gespeicherte Information über den Testbehälter und/oder das Testmerkmal nach Identifizierung des Testbehälters (1, 11) dem jeweiligen Testmerkmal (3-6, 13) zugeordnet wird; und
d) Inspizieren des Testbehälters, umfassend einen Vergleich wenigstens eines aktuell an dem Testbehälter gemessenen Messwerts (M) mit dem auf der ausgelesenen Information basierenden Sollwert.

16. Verfahren nach Anspruch 15, wobei das Auslesen des Datenträgers (7) in Abhängigkeit von der Position des Testbehälters getriggert wird.

17. Verfahren nach Anspruch 15 oder 16, bei dem der Testbehälter (1, 11) ferner in einem Strom aus Produktbehältern (P) zugeführt und nach der Überprüfung der Behälterinspektionseinheit (23) aus dem Strom ausgesondert wird, wobei das Vorhandensein eines nicht ordnungsgemäß ausgesonderten Testbehälters (1, 11) stromabwärts mittels eines charakteristischen Lichtschrankenreflexes, insbesondere an dem Datenträger (7), festgestellt wird.

18. Verfahren nach wenigstens einem der Ansprüche 15 bis 17, ferner mit einem Schritt e) des Abspeicherns von Inspektionsergebnissen aus dem Schritt d).

19. Verfahren nach Anspruch 18, ferner mit einem Schritt f) des Auswertens einer zeitlichen Abfolge von Inspektionsergebnissen, die an einem bestimmten Testmerkmal (3-6, 13) oder an einander entsprechenden Testmerkmalen (3-6, 11) unterschiedlicher Testbehälter (1, 11) ermittelt wurden.

## Claims

1. Device (21) for checking the operability of a container inspection unit (23), comprising:
- at least one test container (1, 11), on which at least one test feature (3-6, 13) and a data carrier (7) with information for identifying the test container (1, 11) are provided; and
- a reading unit (25) for reading the data carrier (7), wherein the information is stored in the form of a code on the data carrier (7),
**characterized in that**
the code is a standardized, optically readable, multidimensional code (8), and the device (21) is configured to individually assign a reference value (R) to the test container (1, 11) with the help of the reading unit (25) and to derive a desired value for the inspection of the test feature, in particular **in that** information stored centrally in an evaluation unit (27) about the test container and/or the test feature is assigned to the respective test feature (3-6, 13) after identification of the test container (1, 11).

2. Device according to claim 1, wherein the multidimensional code (8) is provided on the test container (1, 11) circumferentially distributed several times, in particular at least five times.

3. Device according to claim 1 or 2, wherein the data carrier (7) comprises a carrier film (9) which is printed with the multidimensional code (8) and is in particular self-adhesive.

4. Device according to at least one of the preceding claims, wherein the multidimensional code (8) is a code, in particular a matrix code, a dot code or a stacked code.

5. Device according to at least one of the preceding claims, wherein the multidimensional code (8) is formed to be darkly contrasting in relation to a reflective layer.

6. Device according to at least one of the preceding claims, wherein the code is a two-dimensional code (8).

7. Device according to claim 6, wherein the at least one reference value (R) characterizes the associated test feature (3-6, 13) with respect to its dimensions (X1, X2, F1, F2) and/or its position (X3, Y) on the test container (1, 11) and/or with respect to an interaction with a measuring radiation.

8. Device according to at least one of the preceding claims, wherein a plurality of test features (3-6, 13) are provided on the test container (1, 11) for checking different functional regions (1a-1c) of a product container (P) corresponding to the test container.

9. Device according to at least one of the preceding claims, wherein at least one test feature (3-6) is mounted in the region (1a) of the side wall of the test container (1) and/or in the region (1b) of the bottom of the test container and/or in the region of a closure thread of the test container and/or in the region (1c) of a closure sealing surface.

10. Device according to at least one of claims 1 to 9, wherein the test feature (13) is a liquid filled into the test container (11) to a predetermined filling level (F1, F2).

11. Device according to claim 10, wherein the data carrier (7) contains at least one reference value (R) for the level of the predetermined filling level (F1, F2) and/or for a measuring beam attenuation by the liquid.

12. Device according to at least one of the preceding claims, wherein the test container (1, 11) and/or the test feature (3-6, 13) is provided with a seal (10).

13. Device according to at least one of the preceding claims, further comprising an evaluation unit (27) for determining at least one desired value on the basis of the information read from the data carrier (7), and for comparing the desired value with a measurement result (M) determined at the at least one test feature (3-6, 13) in the container inspection unit (23).

14. Device according to at least one of the preceding claims, wherein the device is further configured to automatically place the container inspection unit (23) in an operating state for test inspection of the test container (1, 11) by registering or recognizing the test container (1, 11), in particular by reading the data carrier (7).

15. Method for checking the operability of a container inspection unit (23) with the device according to at least one of the preceding claims, wherein the method comprises the following steps:
a) feeding the test container (1, 11);
b) reading out the data carrier (7);
c) identifying the test container on the basis of information read out in step b), wherein a reference value R) is individually assigned to the test container (1, 11) with the help of the reading unit (25) and a desired value is derived therefrom for the inspection of the test feature (3-6, 13), in particular in that information stored centrally in an evaluation unit (27) about the test container and/or the test feature is assigned to the respective test feature (3-6, 11) after identification of the test container (1, 11); and
d) inspecting the test container, comprising a comparison of at least one measured value (M) currently measured on the test container with the desired value (R) based on the information read out.

16. Method according to claim 15, wherein the reading out of the data carrier (7) is triggered as a function of the position of the test container.

17. Method according to claim 15 or 16, in which the test container (1, 11) is further supplied in a stream of product containers (P) and, after checking of the container inspection unit (23), is separated from the stream, wherein the presence of an improperly separated test container (1, 11) is determined downstream by means of a characteristic light barrier reflex, in particular on the data carrier (7).

18. Method according to at least one of claims 15 to 17, further comprising a step e) of storing inspection results from step d).

19. Method according to claim 18, further comprising a step f) of evaluating a chronological sequence of inspection results which have been determined on a specific test feature (3-6, 13) or on test features (3-6, 11) of different test containers (1, 11) which correspond to one another.

## Revendications

1. Dispositif (21) destiné à vérifier la capacité de fonctionnement d'une unité d'inspection de contenants (23), comprenant :
- au moins un contenant de test (1, 11), sur lequel sont prévus au moins un signe distinctif de test (3-6, 13) et un support de données (7) avec de l'information pour l'identification du contenant de test (1, 11) ; et
- une unité de lecture (25) destinée à la lecture du support de données (7), l'information étant mémorisée sous la forme d'un code sur le support de données (7),
**caractérisé**
**en ce que** le code est un code multi-dimensionnel (8) standardisé, pouvant être lu par voie optique, et le dispositif (21) est conçu pour, à l'aide de l'unité de lecture (25), associer individuellement une valeur de référence (R) au contenant de test (1, 11), et pour alors en déduire une valeur de consigne pour l'inspection du signe distinctif de test (3-6, 13), notamment par le fait que de l'information mémorisée de manière centralisée dans une unité de traitement de données (27) concernant le contenant de test et/ou le signe distinctif de test, est, après identification du contenant de test (1, 11), associée au signe distinctif de test (3-6, 13) respectif.

2. Dispositif selon la revendication 1, dans lequel le code multi-dimensionnel (8) est prévu plusieurs fois sur le contenant de test (1, 11) de manière répartie sur la périphérie, de préférence au moins cinq fois.

3. Dispositif selon la revendication 1 ou la revendication 2, dans lequel le support de données (7) comprend une feuille de support (9), sur laquelle est imprimé le code multi-dimensionnel (8), et qui est notamment autocollante.

4. Dispositif selon l'une au moins des revendications précédentes, dans lequel le code multi-dimensionnel (8) est un code, notamment un code matriciel, un code à points ou un code empilé.

5. Dispositif selon l'une au moins des revendications précédentes, dans lequel le code multi-dimensionnel (8) est réalisé de manière foncée contrastante par rapport à une couche réfléchissante.

6. Dispositif selon l'une au moins des revendications précédentes, dans lequel le code est un code bi-dimensionnel (8).

7. Dispositif selon la revendication 6, dans lequel ladite au moins une valeur de référence (R) caractérise le signe distinctif de test (3-6, 13) quant à ses dimensions (X1, X2, F1, F2), et/ou sa position (X3, Y) sur le contenant de test (1, 11), et/ou quant à une interaction avec un rayonnement de mesure.

8. Dispositif selon l'une au moins des revendications précédentes, dans lequel sur le contenant de test (1, 11) sont prévus plusieurs signes distinctifs de test (3-6, 13) pour la vérification de différentes zones fonctionnelles (1a-1c) d'un contenant de produit (P) correspondant au contenant de test.

9. Dispositif selon l'une au moins des revendications précédentes, dans lequel au moins un signe distinctif de test (3-6) est placé dans la zone (1a) de la paroi latérale du contenant de test (1), et/ou dans la zone (1b) du fond du contenant de test, et/ou dans la zone d'un filetage de fermeture du contenant de test, et/ou dans la zone (1c) d'une surface d'étanchéité de fermeture.

10. Dispositif selon l'une au moins des revendications 1 à 9, dans lequel le signe distinctif de test (13) est un liquide remplissant le contenant de test (11) jusqu'à un niveau de remplissage (F1, F2) prescrit.

11. Dispositif selon la revendication 10, dans lequel le support de données (7) renferme au moins une valeur de référence (R) relative au niveau de remplissage prescrit (F1, F2) et /ou relative à une atténuation de rayonnement de mesure, par le liquide.

12. Dispositif selon l'une au moins des revendications précédentes, dans lequel le contenant de test (1, 11) et/ou le signe distinctif de test (3-6, 13) sont munis d'un sceau de protection (10).

13. Dispositif selon l'une au moins des revendications précédentes, comprenant par ailleurs une unité de traitement de données (27) pour déterminer au moins une valeur de consigne sur la base de l'information lue du support de données (7), et pour comparer la valeur de consigne avec un résultat de mesure (M) déterminé sur ledit au moins un signe distinctif de test (3-6, 13) dans l'unité d'inspection de contenant (23).

14. Dispositif selon l'une au moins des revendications précédentes, le dispositif étant par ailleurs conçu pour transférer automatiquement l'unité d'inspection de contenant (23) dans un état de fonctionnement pour l'inspection de test du contenant de test (1, 11), en annonçant ou en reconnaissant le contenant de test (1, 11), notamment par lecture du support de données (7).

15. Procédé destiné à vérifier la capacité de fonctionnement d'une unité d'inspection de contenants (23), à l'aide du dispositif selon l'une au moins des revendications précédentes, le procédé comprenant les étapes suivantes :
a) l'amenée du contenant de test (1, 11) ;
b) la lecture du support de données (7) ;
c) l'identification du contenant de test au regard de l'information lue dans l'étape b), le procédé étant tel que l'on associe individuellement une valeur de référence (R) au contenant de test (1, 11) à l'aide de l'unité de lecture (25), et que l'on en déduise une valeur de consigne pour l'inspection du signe distinctif de test (3-6, 13), notamment par le fait que de l'information mémorisée de manière centralisée dans une unité de traitement de données (27) concernant le contenant de test et/ou le signe distinctif de test, est, après identification du contenant de test (1, 11), associée au signe distinctif de test (3-6, 13) respectif ; et
d) l'inspection du contenant de test, comprenant une comparaison d'au moins une valeur de mesure (M) mesurée actuellement sur le contenant de test, avec la valeur de consigne se basant sur l'information ayant été lue.

16. Procédé selon la revendication 15, d'après lequel la lecture du support de données (7) est déclenchée en fonction de la position du contenant de test.

17. Procédé selon la revendication 15 ou la revendication 16, d'après lequel le contenant de test (1, 11) est par ailleurs amené dans un flux de contenants de produit (P), et, après vérification de l'unité d'inspection de contenant (23), est extrait du flux, la présence en aval d'un contenant de test (1, 11) non extrait comme il se doit, étant repérée au moyen d'une réflexion de barrière lumineuse, caractéristique, notamment sur le support de données (7).

18. Procédé selon l'une au moins des revendications 15 à 17, comprenant par ailleurs une étape e) de mémorisation de résultats d'inspection en provenance de l'étape d).

19. Procédé selon la revendication 18, comprenant par ailleurs une étape f) de traitement de données d'une suite temporelle de résultats d'inspection, qui ont été déterminés sur un signe distinctif de test (3-6, 13) ou sur des signes distinctifs de test (3-6, 13) mutuellement correspondants de différents contenants de test (1, 11).
